# EUROPÄISCHE PATENTANMELDUNG

(11) **EP 1 207 118 A2**
(43) Veröffentlichungstag der Anmeldung: **22.05.2002**
(21) Anmeldenummer: 01122171.0
(22) Anmeldetag: 15.09.2001
(51) Int. Cl.: B65D 41/04, B29C 45/16

(54) **Schraubkappe zum Verschliessen eines Behälter-Schraubstutzens**

(30) Priorität: 18.11.2000 DE 10057370
(71) Anmelder: Dietrich-Troeltsch GmbH & Co., 70173 Stuttgart (DE)
(72) Erfinder: Troeltsch, Peter Dietrich, 70619 Stuttgart (DE)
(74) Vertreter: Fleck, Hermann-Josef, Dr.-Ing.

(57) **Zusammenfassung**

Die Erfindung betrifft eine Schraubkappe zum Verschließen eines Behälter-Schraubstutzens, die eine Deckwand mit hülsenförmiger und auf ihrer Innenseite mit einem Schraubgewinde versehene Mantelwand umfasst und bei der auf der Innenseite der Deckwand im Übergangsbereich zur Mantelwand ein ringscheibenförmiges Dichtungselement angebracht ist. Die Herstellung der Schraubkappe mit verbessertem Halt des Dichtungselementes wird dadurch verbilligt, dass das Dichtungselement über einen oder mehrere Durchbrüche in der Deckwand hindurch im Zweikomponenten-Spritzgießverfahren an die Deckwand einer vorgespritzten Schraubkappe angespritzt ist.

## Beschreibung

Die Erfindung betrifft eine Schraubkappe zum Verschließen eines Behälter-Schraubstutzens, die eine Deckwand mit hülsenförmiger und auf ihrer Innenseite mit einem Schraubgewinde versehene Mantelwand umfasst und bei der auf der Innenseite der Deckwand im Übergangsbereich zur Mantelwand ein ringscheibenförmiges Dichtungselement angebracht ist.

Beim Aufschrauben einer derartigen Schraubkappe auf einen Behälter-Schraubstutzen wird das auf der Innenseite der Deckwand angebrachte Dichtungselement gegen die Stirnfläche des Behälter-Schraubstutzens gepresst, um einen dichten Verschluss der Öffnung des Behälter-Schraubstutzens zu erreichen. Das elastische Dichtungselement ist dabei nachträglich in eine im Kunststoff-Spritzgiessverfahren vorgefertigte Schraubkappe eingebracht, vorzugsweise eingeklebt.

Diese Herstellung einer Schraubkappe mit einem Dichtungselement erfordert einen zusätzlichen Montageaufwand und außerdem ist die Verbindung zwischen Dichtungselement und Deckwand der Schraubkappe oft nicht ausreichend, da beim Aufschrauben der Schraubkappe auf den Behälter-Schraubstutzen gegen Ende der Aufschraubbewegung die Klebeverbindung quer zur Verbindungsrichtung auf Scherung beansprucht wird.

Es ist Aufgabe der Erfindung, eine Schraubkappe der eingangs erwähnten Art zu schaffen, bei der mit reduziertem Herstellungsaufwand zusätzlich ein verbesserter Halt des Dichtungselementes in der Schraubkappe erreicht wird.

Diese Aufgabe wird nach der Erfindung dadurch gelöst, dass das Dichtungselement über einen oder mehrere Durchbrüche in der Deckwand hindurch im Zweikomponenten-Spritzgießverfahren an die Deckwand einer vorgespritzten Schraubkappe angespritzt ist.

Da die Schraubkappe in der Regel auf Seiten der Außenkontur angespritzt wird, d.h. die feststehende Werkzeughälfte bestimmt die Außenkontur der Schraubkappe, kann die Anspritzseite im zweiten Spritzvorgang beibehalten werden, obwohl das Dichtungselement an der Deckwand der vorgefertigten Schraubkappe hinterspritzt werden muss. Daher kann die Schraubkappe mit dem angespritzten Dichtungselement auf einer Zweikomponenten-Spritzgussmaschine mit zwei Spritzstationen vollautomatisch kostengünstig hergestellt werden. In den beiden Spritzstationen werden die Kunststoffe so gewählt, dass die vorgefertigte Schraubkappe nach dem Abkühlen eine ausreichende Festigkeit aufweist und das eingespritzte Dichtungselement sich fest mit der vorgefertigten Schraubkappe verbindet und für einen guten Presssitz in der Aufschraub-Endstellung die erforderliche Elastizität bringt.

Die Einspritzung des Dichtungselementes wird nach einer Ausgestaltung dadurch erleichtert, dass die vorgespritzte Schraubkappe mehrere, über den Umfang gleichmäßig verteilte Durchbrüche aufweist, und dass diese Durchbrüche über einen abbrechbaren Anguss-Stern zu einem zentrischen Anspritzpunkt geführt sind. Die Anspritzseite kann dann in beiden Spritzstationen beibehalten werden.

Ist nach einer Weiterbildung vorgesehen, dass das ringscheibenförmige Dichtungselement eine Breite aufweist, die größer ist als die Breite der ringförmigen Stirnfläche des Behälter-Schraubstutzens, dann ist sichergestellt, dass die gesamte Stirnfläche des Behälter-Schraubstutzens in die Abdichtung mit einbezogen ist.

Das Verfahren zum Herstellen einer Schraubkappe mit eingespritztem Dichtungselement ist dadurch gekennzeichnet, dass die Schraubkappe mit den Durchbrüchen in der Deckwand in einer ersten Spritzstation einer Zweikomponenten-Spritzgussmaschine aus einem ersten Kunststoff hergestellt wird und dass danach in einer zweiten Spritzstation der Zweikomponenten-Spritzgussmaschine das Dichtungselement aus einem zweiten Kunststoff in die vorgefertigte Schraubkappe eingespritzt wird.

Die Erfindung wird anhand eines in der Zeichnung dargestellten Ausführungsbeispiels näher erläutert. Es zeigen:
- Fig. 1: eine Teil-Seitenansicht mit Teilschnitt einer Schraubkappe mit eingespritztem Dichtungselement und
- Fig. 2: die Schraubkappe nach Fig. 1 in Draufsicht auf die Deckwand.

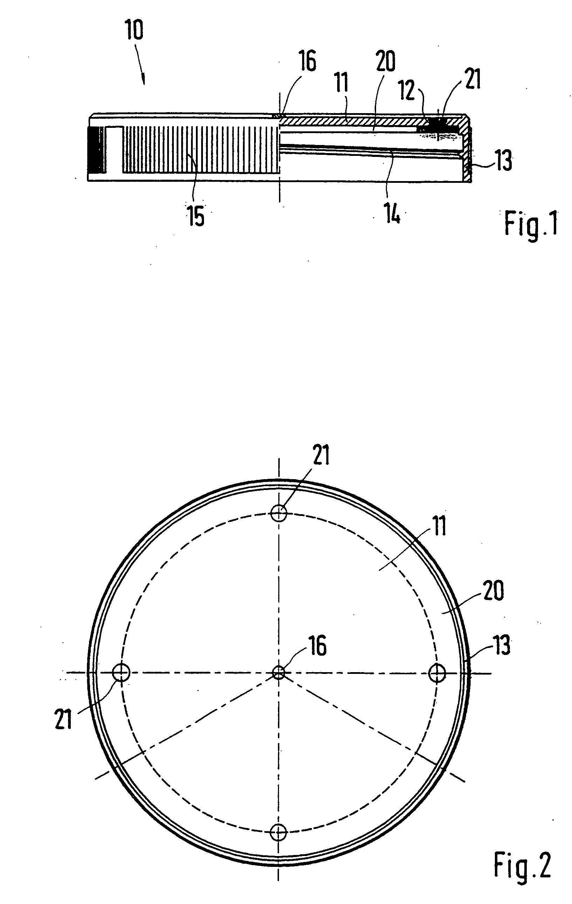

Zum Herstellen einer in den Fig. 1 und 2 gezeigten Schraubkappe wird eine Zweikomponenten-Spritzgussmaschine mit zwei Spritzstationen verwendet, in denen unterschiedlich gewählter Kunststoff verspritzt werden kann.

Die erste Herstellungsphase umfasst eine aus fest aushärtbarem Kunststoff vorgefertigte Schraubkappe 10 mit einer Deckwand 11 und einer angeformten hülsenförmigen Mantelwand 13.

In der Deckwand 11 sind über den Umfang verteilt vier Durchbrüche 12 eingebracht, die auf der Innenseite der Deckwand 11 im Übergangsbereich zur Mantelwand 13 münden. Dieser Übergangsbereich liegt beim Aufschrauben der Schraubkappe auf einem Behälter-Schraubstutzen im Bereich von dessen Stirnfläche. Auf der Innenseite der Mantelwand 13 ist ein Schraubgewinde 14 angeformt, das auf das Außengewinde des Behälter-Schraubstutzens abgestimmt ist. Die Mantelwand 13 ist außen mit einer nut-federartigen Griffprofilierung 15 versehen, die das Fassen der Schraubkappe beim Aufschraubvorgang erleichtert.

In der ersten Spritzstation wird die Schraubkappe 10 ohne Dichtungselement 20 hergestellt. Dabei wird die Anspritzung über den Anspritzpunkt 16 im Zentrum der Deckwand-Außenseite gewählt, indem die feststehende Werkzeughälfte entsprechend ausgebildet wird. Die bewegliche Werkzeughälfte bestimmt die Innenkontur der Schraubkappe 10, wobei Stifte die Durchbrüche 12 freihalten.

Die vorgefertigte Schraubkappe 10 gelangt danach in die zweite Spritzstation, in der ein elastischer Kunststoff für das Dichtungselement 20 verarbeitet wird. Die zweite Spritzstation hat eine weitere bewegliche Werkzeughälfte oder die erste bewegliche Werkzeughälfte wird dort so verändert, dass der Raum für das ringscheibenförmige Dichtungselement und die Durchbrüche 12 frei bleiben. Die Anspritzung kann über einen oder mehrere der Durchbrüche 12 hindurch erfolgen, wobei das Dichtungselement 20 fest mit der Innenseite der Deckwand 11 der vorgefertigten, mit in die zweite Spritzstation übernommenen Schraubkappe 10 verbunden wird. Die Durchbrüche 12 in der Deckwand 11 werden dabei mit Anspritzteilen 21 ausgefüllt, wenn sie für die Anspritzung ausgenützt werden.

Sind mehrere Anspritzpunkte gewählt, dann werden diese in der feststehenden Werkzeughälfte der zweiten Spritzstation über einen Anspritzstern zu einem zentrischen Anspritzpunkt geführt.

Beim Entformen der Schraubkappe 10 mit Dichtungselement 20 kann durch Schieber in der beweglichen Werkzeughälfte das Schraubgewinde 14 freigelegt und die fertige Schraubkappe 10 mit Dichtungselement 20 mittels Auswerfer aus der beweglichen Werkzeughälfte ausgestoßen werden.

Der Herstellvorgang kann durch entsprechende Ausgestaltung der Werkzeughälften oder ihrer Veränderung in den beiden Spritzstationen voll automatisiert werden, so dass danach kein weiterer Arbeitsgang mehr erforderlich ist. Es ist einleuchtend, dass dadurch die Herstellkosten merklich reduziert werden können, was gerade bei einem derartigen Massenartikel für den dichten Verschluss einer Tonerflasche mit einem dünnflüssigen Inhalt von Bedeutung ist.

## Patentansprüche

1. Schraubkappe zum Verschließen eines Behälter-Schraubstutzens, die eine Deckwand mit hülsenförmiger und auf ihrer Innenseite mit einem Schraubgewinde versehene Mantelwand umfasst und bei der auf der Innenseite der Deckwand im Übergangsbereich zur Mantelwand ein ringscheibenförmiges Dichtungselement angebracht ist,
**dadurch gekennzeichnet,**
**dass** das Dichtungselement (20) über einen oder mehrere Durchbrüche (12) in der Deckwand (11) hindurch im Zweikomponenten-Spritzgießverfahren an die Deckwand (11) einer vorgespritzten Schraubkappe (10) angespritzt ist.

2. Schraubkappe nach Anspruch 1,
**dadurch gekennzeichnet,**
**dass** die vorgespritzte Schraubkappe (10) mehrere, über den Umfang gleichmäßig verteilte Durchbrüche (12) aufweist, und
**dass** diese Durchbrüche (12) über einen abbrechbaren Anguss-Stern zu einem zentrischen Anspritzpunkt geführt sind.

3. Schraubkappe nach Anspruch 1 oder 2,
**dadurch gekennzeichnet,**
**dass** der Anspritzpunkt in dem Zentrum der Außenkontur der Deckwand (11) gelegt ist.

4. Schraubkappe nach einem der Ansprüche 1 bis 3,
**dadurch gekennzeichnet,**
**dass** das ringscheibenförmige Dichtungselement (20) eine Breite aufweist, die größer ist als die Breite der ringförmigen Stirnfläche des Behälter-Schraubstutzens.

5. Verfahren zum Herstellen einer Schraubkappe nach einem der Ansprüche 1 bis 4, **dadurch gekennzeichnet,**
**dass** die Schraubkappe (10) mit den Durchbrüchen (12) in der Deckwand (11) in einer ersten Spritzstation einer Zweikomponenten-Spritzgussmaschine aus einem ersten Kunststoff hergestellt wird und
**dass** danach in einer zweiten Spritzstation der Zweikomponenten-Spritzgussmaschine das Dichtungselement (20) aus einem zweiten Kunststoff in die vorgefertigte Schraubkappe (10) eingespritzt wird.
